(19) Europäisches Patentamt
European Patent Office
Office européen des brevets

(11) **EP 4 682 851 A1**

(12) **EUROPEAN PATENT APPLICATION**

(43) Date of publication:
**21.01.2026 Bulletin 2026/04**

(51) International Patent Classification (IPC):
***G08B 17/12*** *(2006.01)*     ***G08B 29/18*** *(2006.01)*
***G01J 5/00*** *(2022.01)*     ***G08B 29/20*** *(2006.01)*

(21) Application number: **25182921.4**

(52) Cooperative Patent Classification (CPC):
**G08B 17/125; G08B 29/188;** G01J 5/0018;
G08B 29/20

(22) Date of filing: **16.06.2025**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **19.07.2024 IN 202411055255**

(71) Applicant: **Life Safety Distribution GmbH 1180 Rolle (CH)**

(72) Inventors:
• **KOTHARI, Sanjay**
  **Charlotte, 28202 (US)**
• **GEORGE, Renjith**
  **Charlotte, 28202 (US)**
• **JOSEPH, Kingslin**
  **Charlotte, 28202 (US)**
• **JOSEPH, Jeslin Paul**
  **Charlotte, 28202 (US)**

(74) Representative: **Haseltine Lake Kempner LLP Cheapside House 138 Cheapside London EC2V 6BJ (GB)**

(54) **FLAME MONITORING SYSTEM AND METHOD THEREOF**

(57) A flame monitoring system (100) is disclosed. The flame monitoring system comprises a flame detector (106) configured to sense an infrared energy emitted by a flame (302), an image capturing device (110), and at least one processor (104). The at least one processor is configured to determine an area of the flame based at least on a first distance between the flame and the flame detector, a predefined flame constant, and the infrared energy; determine a second distance between the flame and the flame detector based at least on parameters associated with the image capturing device and determine a difference between the first distance and the second distance and in an instance in which the difference between the first distance and the second distance is less than or equal to a threshold value, validate the area as an actual area of the flame.

FIG. 1

**EP 4 682 851 A1**

**Description**

**TECHNOLOGICAL FIELD**

Example embodiments of the present disclosure relate generally to a flame monitoring system, and more particularly, to a flame monitoring system for analyzing flame intensity.

**BACKGROUND**

A flame detection system is designed to identify a presence of flames or fires in various environments. Typically, the flame detection system is used in industrial settings. The flame detection system may offer early and reliable detection of fires, ensuring prompt response and minimizing damage. Existing technologies are not able to determine a flame distance and/or a flame size, which may be beneficial in reducing the likelihood that the detection of the flame is not a false alarm. The inventors have identified numerous areas of improvement in the existing technologies and processes, which are the subjects of embodiments described herein. Through applied effort, ingenuity, and innovation, many of these deficiencies, challenges, and problems have been solved by developing solutions that are included in embodiments of the present disclosure, some examples of which are described in detail herein.

**BRIEF SUMMARY**

The following presents a simplified summary to provide a basic understanding of some aspects of the present disclosure. This summary is not an extensive overview and is intended to neither identify key or critical elements nor delineate the scope of such elements. Its purpose is to present some concepts of the described features in a simplified form as a prelude to the more detailed description that is presented later.

In an example embodiment, a flame monitoring system is disclosed. The flame monitoring system comprises a flame detector configured to sense infrared energy (E) emitted by a flame within a field of view (FOV) of the flame detector, an image capturing device configured to capture one or more images of the flame within the FOV of the flame detector, and at least one processor communicatively coupled to the flame detector and the image capturing device. The at least one processor is configured to determine an area (A) of the flame based on a first distance (d1) between the flame and the flame detector, a predefined flame constant (k), and the IR energy (E) emitted by the flame. Further, the at least one processor is configured to determine a second distance (d2) between the flame and the flame detector based at least on one or more parameters associated with the image capturing device and the area (A) of the flame. Further, the at least one processor is configured to determine a difference between the first distance (d1) and the second distance (d2). Thereafter, in an instance in which the difference between the first distance (d1) and the second distance (d2) is less than or equal to a threshold value, the at least one processor is configured to validate the area (A) as an actual area of the flame.

In some embodiments, the flame detector corresponds to an infrared (IR) sensor and the image capturing device corresponds to a camera sensor. In some embodiments, the one or more parameters comprise at least one of a focal length of the image capturing device and a size of the flame on the image capturing device.

In some embodiments, the at least one processor, via using the image capturing device, is configured to determine the size of the flame on the image capturing device, based at least on one or more pixels of the one or more images of the flame captured by the image capturing device. In some embodiments, the at least one processor is further configured to provide the area (A) validated as the actual area of the flame along with a location of the flame and the distance (d1) between the flame and the flame detector, to a user over a display unit.

In some embodiments, in an instance in which the difference between the first distance (d1) and the second distance (d2) exceeds the threshold value, the at least one processor is further configured to determine a subsequent area (Ax) of the flame based at least on the second distance (d2), the predefined flame constant (k), and the infrared energy (E) emitted by the flame; and determine a subsequent distance (dx).

In some embodiments, the at least one processor is configured to reiterate the FOV of the flame detector in an instance in which the difference between the first distance (d1) and the second distance (d2) exceeds the threshold value, to detect the flame within another FOV.

In some embodiments, the image capturing device is positioned in proximity to the flame detector or integrated within the flame detector. In some embodiments, the at least one processor is configured to calibrate the predefined flame constant (k) using data. In some embodiments, the data corresponds to a size of one or more flames and a distance of each of the one or more flames from the flame detector.

In another example embodiment, a method is disclosed. The method comprises determining, via at least one processor, an area (A) of a flame based at least on a first distance (d1) between the flame and a flame detector, a predefined flame constant (k), and an infrared energy (E) emitted by the flame. The flame detector is configured to sense the infrared energy (E) emitted by the flame within a field of view (FOV) of the flame detector. An image capturing device is configured to capture one or more images of the flame within the FOV of the flame detector. The method further comprises determining, via the at least one processor, a second distance (d2) between the flame and the flame detector, based at least on one or more parameters associated with the image capturing device and the area (A) of the flame. The method further comprises determining, via the at least one processor, a difference between the first distance (d1) and the second distance (d2). Thereafter, the method comprises validating, via the at least one processor, the area (A) as an actual area of the flame, in an instance in which the difference between the first distance (d1) and the second distance (d2) is less than or equal to a threshold value.

The above summary is provided merely for purposes of summarizing some example embodiments to provide a basic understanding of some aspects of the present disclosure. Accordingly, it will be appreciated that the above-described embodiments are merely examples and should not be construed to narrow the scope or spirit of the present disclosure in any way. It will be appreciated that the scope of the present disclosure encompasses many potential embodiments in addition to those here summarized, some of which will be further described below.

## BRIEF DESCRIPTION OF THE DRAWINGS

Having thus described certain example embodiments of the present disclosure in general terms, reference will hereinafter be made to the accompanying drawings, which are not necessarily drawn to scale, and wherein:

FIG. 1 illustrates a block diagram of a flame monitoring system in accordance with an example embodiment of the present disclosure;
FIG. 2 illustrates a diagram of operations performed by the flame monitoring system in accordance with an example embodiment of the present disclosure;
FIG. 3 illustrates an architectural view of a facility with the flame monitoring system in accordance with an example embodiment of the present disclosure;
FIG. 4 illustrates a flowchart showing a method for determining a second distance (d2) between a flame and a flame detector of the flame monitoring system in accordance with an example embodiment of the present disclosure;
FIG. 5 illustrates a schematic view of an operation of the flame monitoring system in accordance with an example embodiment of the present disclosure;
FIG. 6 illustrates a flowchart showing a method of the flame monitoring system in accordance with an example embodiment of the present disclosure;
FIG. 7 illustrates a table having a dataset associated with the flame monitoring system in accordance with an example embodiment of the present disclosure; and
FIG. 8 illustrates a flowchart showing a method of the flame monitoring system in accordance with an example embodiment of the present disclosure.

## DETAILED DESCRIPTION

Some embodiments will now be described more fully hereinafter with reference to the accompanying drawings, in which some, but not all, embodiments of the present disclosure are shown. Indeed, various embodiments may be embodied in many different forms and should not be construed as limited to the embodiments set forth herein; rather, these embodiments are provided so that this disclosure will satisfy applicable legal requirements.

The components illustrated in the figures represent components that may or may not be present in various embodiments of the present disclosure described herein such that embodiments may include fewer or more components than those shown in the figures while not departing from the scope of the present disclosure. Some components may be omitted from one or more figures or shown in dashed line for visibility of the underlying components.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in various embodiments," "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments or it may be excluded.

Embodiments of the present disclosure will be described more fully hereinafter with reference to the accompanying drawings in which like numerals represent like elements throughout the several figures, and in which example embodiments are shown. Embodiments of the present disclosure may, however, be embodied in alternative forms and should not be construed as being limited to the embodiments set forth herein. The examples set forth herein are non-limiting examples and are merely examples among other possible examples.

The present disclosure provides various embodiments of a flame monitoring system and a method of flame monitoring. Embodiments may comprise a flame detector and an image capturing device. The flame detector may be configured with an infrared sensor that detects infrared energy (E) emitted by a flame detected within a field of view (FOV). The image capturing device may be configured with a camera sensor that detects the flame within the same FOV in synchronization with the flame detector. The embodiments may further comprise at least one processor communicatively coupled with the flame detector and the image capturing device to determine an area (A) of the flame based at least on a first distance (d1) between the flame and the flame detector, a predefined flame constant (k), and the infrared energy (E) emitted by the flame; determine a second distance (d2) between the flame and the flame detector based at least on one or more parameters associated with the image capturing device and the area (A) of the flame; determine a difference between the first distance (d1) and the second distance (d2); and in an instance in which the difference between the first distance (d1) and the second distance (d2) is less than or equal to a threshold value, validate the area (A) as an actual area of the flame.

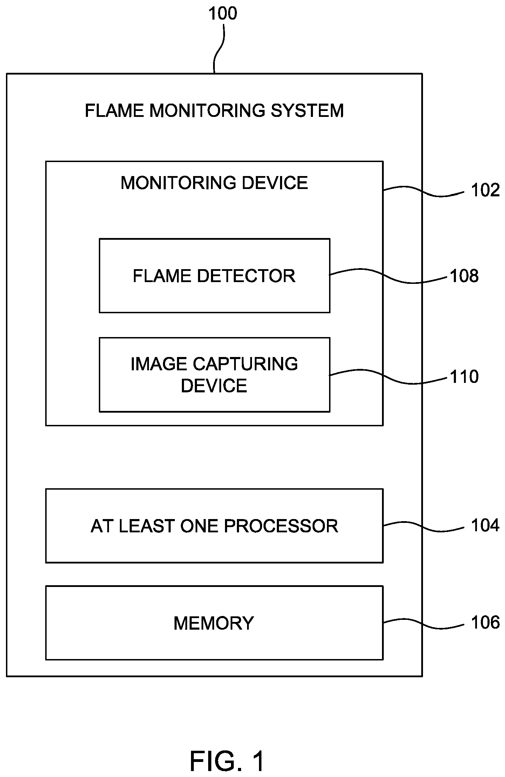

FIG. 1 illustrates a block diagram of a flame monitoring system 100, in accordance with an example embodiment of the present disclosure.

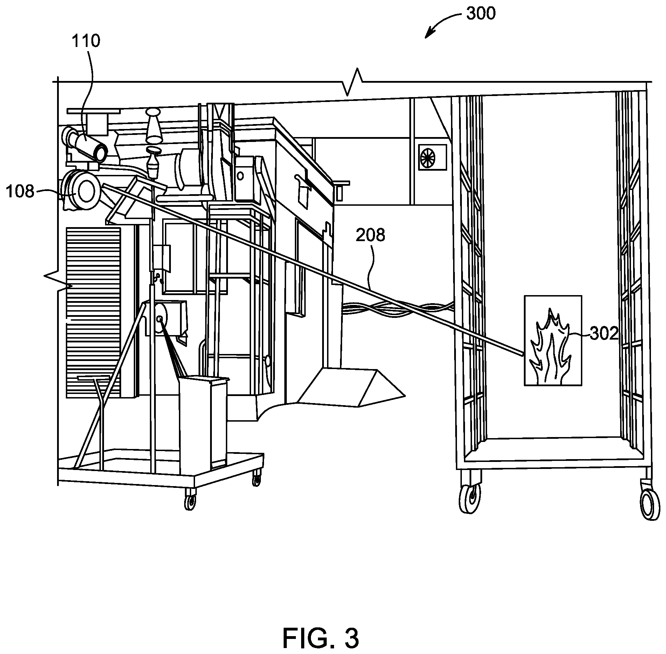

The flame monitoring system 100 may comprise a monitoring device 102, at least one processor 104, and a memory 106. In some embodiments, the monitoring device 102 may be configured to detect presence of a flame within a field of view (FOV). In one example, the monitoring device 102 may be mounted within a facility 300 (FIG. 3). In some embodiments, the facility 300 may comprise at least one of a warehouse, a factory, or an industrial plant. In some embodiments, the monitoring device 102 may be coupled with a power source (not shown). In some embodiments, the power source may be configured to supply a predefined amount of power to the monitoring device 102. In one example, the monitoring device 102 may be configured to utilize infrared rays, heat radiations, light energy, etc. to detect presence of the flame within the FOV.

In some embodiments, the monitoring device 102 may comprise a flame detector 108 and an image capturing device 110. In some embodiments, the flame detector 108 may be configured to sense an infrared energy (E) emitted by the flame within the FOV of the monitoring device 102. In some embodiments, the flame detector 108 may correspond to an infrared (IR) sensor. In one example, the flame detector 108 may correspond to a photo detector, ultraviolet (UV) sensor, temperature detector, etc. In some embodiments, the IR sensor may be configured to detect the flame by sensing the infrared energy (E) emitted by the flame. In some embodiments, the infrared energy may comprise infrared radiations having one or more infrared signals. In one example, the flame may emit the IR radiation in a specific range of wavelength. Further, the specific range of wavelength may correspond to 4-5 microns. Further, the IR sensor may be configured to differentiate the flame and various other signals from ambient sources, based at least on the specific range of the IR radiation emitted by the flame. In some embodiments, the ambient sources may correspond to at least one of sunlight, artificial light, heated surfaces, or physiological thermal radiations.

In some embodiments, the image capturing device 110 may be configured to capture one or more images of the flame within the FOV of the monitoring device 102. In some embodiments, the image capturing device 110 may be configured to detect presence of the flame within the FOV, based at least on the captured one or more images. In some embodiments, the image capturing device 110 may correspond to a camera sensor. In some embodiments, the camera sensor may be configured to utilize ambient light to capture the one or more images of the flame within the FOV. In one example, the at least one image capturing device 110 may be positioned in proximity to the flame detector 108. For example, the at least one image capturing device 110 and the flame detector 108 are positioned such that they are pointed towards the flame within the FOV. In another example, the at least one image capturing device 110 may be integrated within the flame detector 108.

In some embodiments, the at least one processor 104 may be communicatively coupled to the flame detector 108 and the image capturing device 110. In some embodiments, the at least one processor 104 may include suitable logic, circuitry, and/or interfaces that are operable to execute one or more instructions stored in the memory 106 to perform predetermined operations. In one embodiment, the at least one processor 104 may be configured to decode and execute any instructions received from one or more other electronic devices or server(s). The at least one processor 104 may be configured to execute one or more computer-readable program instructions, such as program instructions to carry out any of the functions described in this description. Further, the at least one processor 104 may be implemented using one or more processor technologies known in the art. Examples of the at least one processor 104 may include, but are not limited to, one or more general purpose processors and/or one or more special purpose processors (e.g., digital signal processors or Field Programmable Gate Array (FPGA) processor).

In some embodiments, the at least one processor 104 may be communicatively coupled with the flame detector 108 and the image capturing device 110 of the monitoring device 102. In some embodiments, the at least one processor 104 may be configured to receive data associated with the IR energy (E). In some embodiments, the at least one processor 104 may be configured to determine a first distance (d1) between the flame and the flame detector 108, based at least on the sensed infrared energy (E). In some embodiments, the at least one processor 104 may be configured to determine an area (A) of the flame based at least on the first distance (d1) between the flame and the flame detector 108, a predefined flame constant (k), and the infrared energy (E) emitted by the flame. In some embodiments, the at least one processor 104 may be configured to receive the one or more images captured by the image capturing device 110.

Further, the at least one processor 104 may be configured determine a second distance (d2) between the flame and the flame detector 108 based at least on one or more parameters associated with the image capturing device 110 and the area (A) of the flame. In some embodiments, the one or more parameters may comprise at least one of a focal length of the image capturing device 110 and a size of the flame on the image capturing device 110. Further, the at least one processor 104 may be configured to determine a difference between the first distance (d1) and the second distance (d2) and based on the difference between the first distance (d1) and the second distance (d2) being less than or equal to a threshold value, the at least one processor 104 may validate the area (A) as an actual area of the flame.

The memory 106 may be configured to store the one or more instructions that may cause the at least one processor 104 to perform one or more operations. It is apparent to a person with ordinary skill in the art that the one or more instructions stored in the memory 106 enable the hardware of the flame monitoring system 100 to perform the predetermined operations. Some of the commonly known memory implementations include, but are not limited to, fixed (hard) drives, magnetic tape, floppy diskettes, optical disks, Compact Disc Read-Only Memories (CD-ROMs), and magneto-optical disks, semiconductor memories, such as ROMs, Random Access Memories (RAMs), Programmable Read-Only Memories (PROMs), Erasable PROMs (EPROMs), Electrically Erasable PROMs (EEPROMs), flash memory, magnetic or optical cards, or other type of media/machine-readable medium suitable for storing electronic instructions.

It will be apparent to one skilled in the art that above-mentioned components of the flame monitoring system 100 have been provided only for illustration purposes, without departing from the scope of the disclosure.

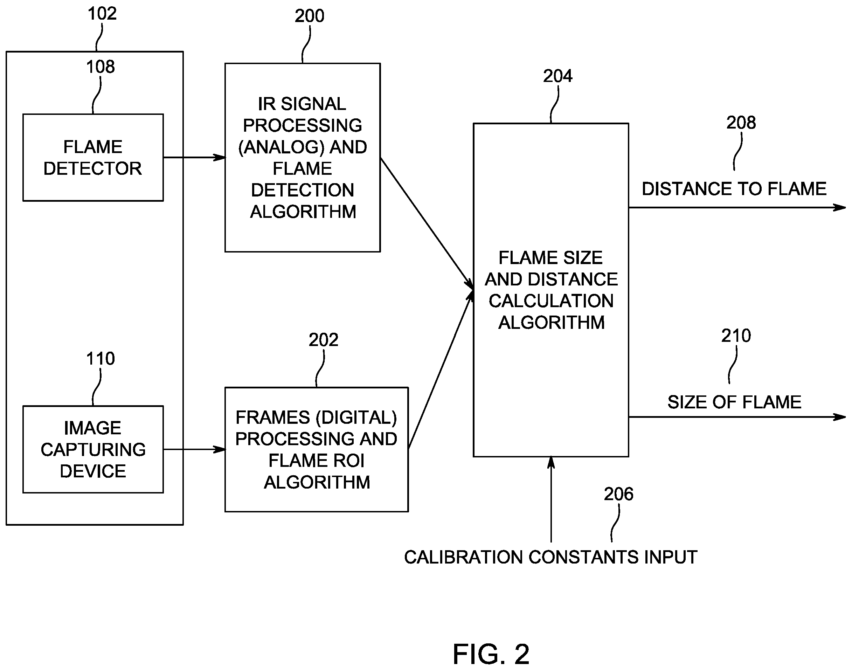

FIG. 2 illustrates a diagram of operations performed by a flame monitoring system 100, in accordance with an example embodiment of the present disclosure. FIG. 3 illustrates an architectural view of the flame monitoring system 100 within a facility 300, in accordance with an example embodiment of the present disclosure. FIGS. 2-3 are described in conjunction with FIG. 1.

In some embodiments, the monitoring device 102 may comprise the flame detector 108 and the image capturing device 110. In one example, the flame detector 108 and the image capturing device 110 may be integrated together within the monitoring device 102 (as illustrated in FIG. 3). In another example, the flame detector 108 and the image capturing device 110 may be mounted separately and positioned in proximity to each other such that they are both pointed towards the FOV. In some embodiments, the flame detector 108 may correspond to an IR sensor and the image capturing device 110 may correspond to a camera sensor. In some embodiments, the monitoring device 102 may be configured to perform one or more operations to determine the actual area of the flame.

At operation 200, the flame detector 108 may be configured to sense infrared energy (E) emitted by a flame 302 (FIG. 3), to detect presence of the flame 302 within the FOV. In some embodiments, the flame 302 may be generated due to combustion of one or more fuel sources such as gas, petrol, or inflammable objects. At operation 202, the image capturing device 110 may be configured to capture the one or more images of the flame 302 within the FOV of the monitoring device 102. In some embodiments, the image capturing device 110 may comprise a preprocessor that is configured to perform one or more operations to fetch a usable data from the one or more captured images. Further, the one or more operations may comprise frames processing and detect the flame 302 using the flame region of interest (ROI) algorithms.

In some embodiments, the flame monitoring system 100 may further comprise the at least one processor 104. Further, the at least one processor 104 may be communicatively coupled with the flame detector 108 and the image capturing device 110. Further, at operation 204, the at least one processor 104 may be configured to evaluate distance to the flame (illustrated by 208) and size of the flame (illustrated by 210), based on the data received from the flame detector 108 and the image capturing device 110. Further, the data may comprise the IR energy sensed by the flame detector 108 and the one or more images captured by the image capturing device 110. In some embodiments, the data may correspond to digital signals generated through IR signals processing and flame detection algorithm (operation 200), representing real time or near real time detection of infrared energy emitted by the flame 302 within the FOV. Further, the data may correspond to the frames obtained via digital processing and flame ROI algorithm depicting the presence of flame 302 (FIG. 3). In some embodiments, the at least one processor 104 may be configured to determine the first distance (d1) between the flame 302 and the flame detector 108. Further, the first distance (d1) may correspond to an estimated distance or an arbitrary number determined between the flame 302 and the flame detector 108. Further, the at least one processor 104 may use the first distance (d1) to determine an area (A) or a first area (A1) as per the first iteration, using an inverse square law. As per the inverse square law, the infrared energy (E) is proportional to the area of the flame 302 and inversely proportional to square of the distance (d), as depicted by the following:

$$\textit{Infrared energy = (flame constant x area of flame) / (distance)}^2$$

$$E = (k \; x \; A) \; / \; (d)^2$$

In some embodiments, the infrared energy (E) may be sensed by the flame detector 108 and k (flame constant) may be calibrated depending on a set of calibration constant inputs 206. Further, the calibration constant inputs 206 may include at least flame size, flame distance, infrared energy, or calibration constant (k). In some embodiments, the calibration constant inputs 206 may be stored in the memory 106. In some embodiments, the at least one processor 104 may further be configured to determine a second distance (d2) between the flame and the flame detector 108 based at least on the area (A) and one or more parameters associated with the image capturing device 110. In some embodiments, the one or more parameters may comprise at least one of a focal length of the image capturing device 110, and a size of the flame 302 (referred herein as size of object, known via the image capturing device 110). In one example, the image capturing device 110 is configured to auto focus on the flame 302 and the focal length is the focal length of a lens of the image capturing device 110 while the flame 302 is in focus.

In some embodiments, the at least one processor 104 may further be configured to determine a difference between the first distance (d1) and second distance (d2). The at least one processor 104 may be configured to determine the difference to assess if the difference between the first distance (d1) and second distance (d2) is less than or equal to a threshold value. In some embodiments, the threshold value may correspond to a baseline value depicting differential convergence of the first distance (d1) and the second distance (d2). Further, in an instance in which the difference between the first distance (d1) and the second distance (d2) is less than or equal to a threshold value, the at least one processor 104 may validate the area (A) as an actual area of the flame. In a first example, the at least one processor 104 determines the first distance (d1) as 100 m and the second distance (d2) as 150 m. Further, the at least one processor 104 evaluates the difference between the first distance (d1) and second distance (d2) as 50 m. Further, based at least on the evaluated difference between the first distance (d1) and second distance (d2), the at least one processor 104 determines the difference between the first distance (d1) and second distance (d2) is not equal to or not close to the second distance (d2) (i.e., the difference is greater than the threshold value). Further, the at least one processor 104 may evaluate the first area (A = 0.25 meter square) as not being the actual area of the flame 302. In a second example, the at least one processor 104 determines the first distance (d1) as 199.9 m and the second distance (d2) as 199.9 m. Further, the at least one processor 104 evaluates the difference between the first distance (d1) and second distance (d2) as 0 m. Further, based at least on the evaluated difference between the first distance (d1) and second distance (d2), the at least one processor 104 determines the difference between the first distance (d1) and second distance (d2) is equal to the second distance (d2) (i.e., the difference is less than or equal to the threshold value), the at least one processor 104 may evaluate the first area (A = 0.995 meter square) as the actual area of the flame 302.

In another instance, if the difference between first distance (d1) and second distance (d2) exceeds the threshold value, then the at least one processor 104 derives a subsequent area (Ax) or herein, a second area (A2) using the second distance (d2). In some embodiments, the at least one processor 104 further determines a third distance (d3) followed by determining difference between the second distance (d2) and the third distance (d3). The at least one processor 104 assesses if the difference between the second distance (d2) and the third distance (d3) is less than or equal to the threshold value. In an instance in which the difference is greater than the threshold value, the at least one processor 104 may continue to reiterate the calculation to determine the actual distance of the flame 302. In an instance in which the difference is less than or equal to the threshold value, the at least one processor 104 may stop reiterating the calculation. In an example, if the difference between the first distance (suppose d1= 100 m) and second distance (suppose d2 = 150) i.e. 50 m suggest that the first distance (d1) is not equal to the second distance (d2) or the difference i.e. 50 m may be more than the threshold value, then the at least one processor 104 may evaluate the first area (A = 0.25 meter square) as not the actual area of the flame 302. As illustrated in FIG. 3, the flame monitoring system 100 may be mounted within the facility 300. Further, the monitoring device 102 may be mounted at a predefined height above a ground surface. In some embodiments, the monitoring device 102 may be configured to detect the flame 302 within the FOV.

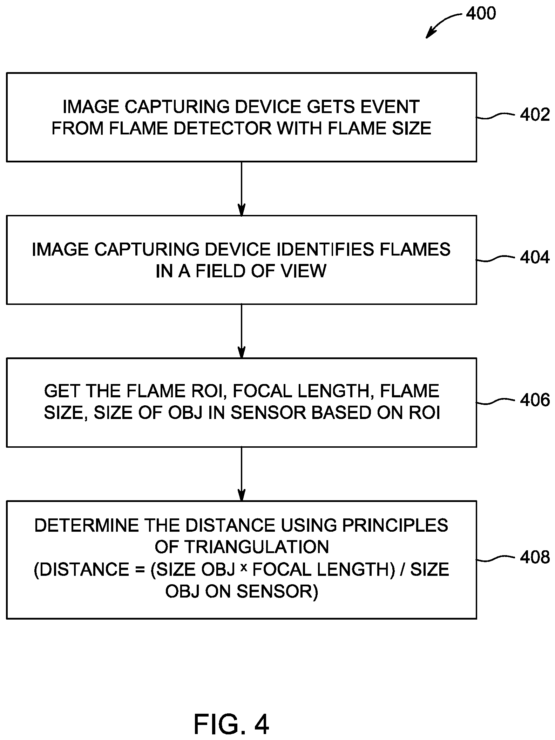

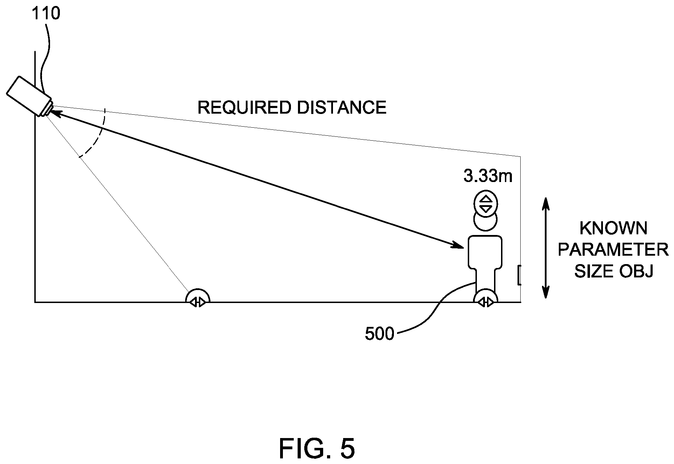

FIG. 4 illustrates a flowchart showing a method 400 for determining the second distance (d2) between the flame 302 and the flame detector 108 of the flame monitoring system 100, in accordance with an example embodiment of the present disclosure. FIG. 5 illustrates a schematic view of an operation of the flame monitoring system 100, in accordance with an example embodiment of the present disclosure. FIGS. 4-5 are explained in conjunction with FIG. 1-3.

At operation 402, the flame detector 108 may be configured to sense the infrared energy (E) emitted by the flame 302 within the FOV. In some embodiments, the flame detector 108 and the image capturing device 110 may be configured to operate collectively. Further, upon detection of the IR energy via the flame detector 108, the image capturing device 110 may get activated to capture the one or more images within the FOV of the flame detector 108. In some embodiments, the image capturing device 110 may be configured to receive a flame size (area, A). In some embodiments, the area (A) may be calculated via the at least one processor 104, using the inverse square law. The inverse square law is based on the IR energy detected by the flame detector 108.

At the operation 404, the image capturing device 110 may identify the flame 302 within the FOV. The image capturing device 110 may capture one or more images to identify the flame 302 within the FOV. In some embodiments, the one or more images may or may not include the flame 302. In an example, if the one or more images include the flame 302, then the image capturing device 110 may be configured to freeze the frame precisely having images of the flame 302. In another example, if the one or more images may not include the flame 302, then the image capturing device 110 may be configured to recapture fresh images to capture frames depicting the flame 302 precisely.

At the operation 406, the image capturing device 110 may be configured to identify the region of interest (ROI) in the field of view (FOV). In some embodiments, based on the captured frames from the one or more images, the image capturing device 110 may be configured to identify regions of interest (ROI) having the flame 302. In one example, the image capturing device 110 may identify regions of interest (ROI) in frames of the one or more images by analyzing factors such as contrast, color, or motion. For example, the image capturing device 110 may identify the ROI based at least on the pixels that makeup the flame within the one or more images captured by the image capturing device 110 based on the analyzed factors. Further, the flame ROI algorithm (as illustrated in FIG. 2) may detect significant changes or patterns within the frames, focusing on regions that stand out based on predefined criteria like object detection, edge detection, or motion tracking of the flame 302. Further, the process may assist the image capturing device 110 to prioritize and capture relevant details of the flame 302 while minimizing irrelevant background within the FOV. Further, the at least one processor 104 may be configured to determine the one or more parameters associated with the image capturing device 110. Further, the one or more parameters may comprise at least the focal length of the image capturing device 110 and the size of the flame 302 on the image capturing device 110. Further, the at least one processor 104 may be configured to retrieve the area (A) as predetermined by the at least one processor 104 using the inverse square law and IR energy sensed by the flame detector 108.

At operation 408, the at least one processor 104 may be configured to determine the second distance (d2) using a principle of triangulation. As per the principle of triangulation,

$$Distance = (size\ of\ object\ x\ focal\ length)\ /\ size\ of\ object\ via\ the\ image\ capturing\ device$$

In one example, the second distance (d2) may be determined by the at least one processor 104 as, (d2) = (A1 x focal length) / size of object via the image capturing device 110. Further, the second distance (d2) may correspond to a distance between the image capturing device 110 and an object 500 (as illustrated in FIG. 5). In one example, if the size of the object 500 may be 100 cm, focal length may be 40 mm and a size of the object 500 (as determined via the image capturing device 110) may be 10 mm, then the second distance (d2) may correspond to 4 m. Similarly, the at least one processor 104 may determine the second distance (d2) between the image capturing device 110 and the flame 302. The determined second distance (d2) may be subtracted from the pre-assumed first distance (d1) via the processor 104 to deduce a difference, such as an absolute difference. The at least one processor 104 assigns the first distance (d1) as the final flame distance 208 and the first area (A) as flame area 210 when the difference may be nearly equal to the threshold value.

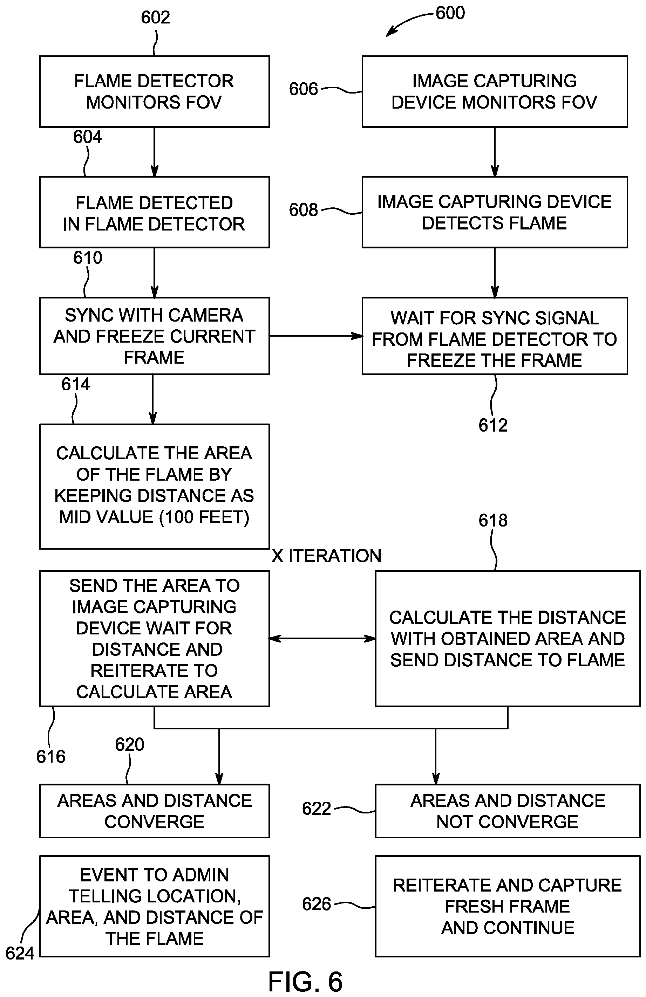

FIG. 6 illustrates a flowchart showing a method 600 of the flame monitoring system 100, in accordance with an example embodiment of the present disclosure. FIG. 6 is described in conjunction with FIGS. 1-5.

At operation 602, the flame detector 108 may be configured to monitor the FOV. In some embodiments, the flame detector 108 may detect infrared (IR) energy emitted by the flame 302. In some embodiments, the flame detector 108 may be configured to be installed within the monitoring device 102. In some embodiments, the flame detector 108 may be configured to monitor the FOV in a real time or near real time. At operation 604, the flame detector 108 may concurrently determine the presence of the flame 302 within the FOV. In some embodiments, the flame detector 108 may be configured to detect the flame 302 using the IR energy emitted by the flame 302. In some embodiments, the flame detector 108 may be configured to determine the presence of the flame 302 using the IR energy generated by the flame 302 within the FOV.

At operation 606, the image capturing device 110 may be configured to monitor the FOV. In some embodiments, the image capturing device 110 may be mounted on the monitoring device 102. At operation 608, the image capturing device 110 may be configured to detect the flame 302 within the FOV. Further, the image capturing device 110 may be configured to capture one or more images of the flame 302 within the FOV. The image capturing device 110 may capture various images of the flame 302 within the FOV, based on the output generated by the flame detector 108. In some embodiments, the image capturing device 110 may be configured to capture the one or more images of the flame only when the flame 302 is detected by the flame detector 108 within the FOV. In some embodiments, the flame detector 108 and the image capturing device 110 may function synchronously to determine the presence of the flame 302 within the FOV. Further, the image capturing device 110 may be configured to capture the one or more images in a plurality of frames. In some embodiments, the one or more images captured by the image capturing device 110 based at least on the sensing of the infrared energy (E) by the flame detector 108.

At operation 610, the flame detector 108 and the image capturing device 110 may synchronously determine the presence of the flame 302 within the FOV. In some embodiments, the flame detector 108 may detect the flame 302 by sensing the infrared energy (E), and generating a synchronized output corresponding to the presence of the flame towards the image capturing device 110. Successively, the image capturing device 110 may be configured to capture the one or more images in the plurality of frames in synchronization with the flame detector 108.

At operation 612, the image capturing device 110 may be configured to receive a trigger signal from the flame detector 108. Further, the image capturing device 110, in synchronization with the flame detector 108 may be configured to freeze one or more frames to set a region of interest (ROI) within the FOV to visually capture and detect the flame 302, based at least on the trigger signal received from the flame detector 108.

At operation 614, the at least one processor 104 may be communicatively coupled with the flame detector 108 and the image capturing device 110. Further, the at least one processor 104 may be configured to calculate the area (A) of the flame 302 by assuming a first distance (d1). In some embodiments, the first distance (d1) may be a mid-value such as 100 feet. The first distance (d1) may be an estimated distance or an arbitrary number related to the actual distance between the flame 302 and the flame detector 108. Further, the at least one processor 104 may use the first distance (d1) to determine an area (A) of the flame 302.

At operation 616, the at least one processor 104 may be configured to send the area (A) to the image capturing device 110. Further, the at least one processor 104 may be configured to wait for a response from the image capturing device 110 and perform one or more iterations to calculate area of the flame 302. In some embodiments, the response may be associated with the distance between the flame 302 and the monitoring device 102 calculated by the image capturing device 110. At operation 618, the at least one processor 104 may be configured to calculate the second distance (d2). In some embodiments, the at least one processor 104 may further be configured to calculate the second distance (d2) between the flame and the flame detector 108 based at least on the area (A) and one or more parameters associated with the image capturing device 110. The one or more parameters comprises at least one of a focal length of the image capturing device 110, and a size of the flame 302 (referred herein as size of object, known via the image capturing device 110). The focal length of the image capturing device 110 is pre-calibrated within the at least one processor 104.

At operation 620, the at least one processor 104 may be configured to determine a difference between the first distance (d1) and second distance (d2). Further, the at least one processor 104 may be configured to determine the difference to assess if the difference between the first distance (d1) and second distance (d2) is less than or equal to a threshold value. In some embodiments, the threshold value may correspond to a baseline value depicting differential convergence of the first distance (d1) and the second distance (d2). In one instance, the difference between the first distance (d1) and the second distance (d2) is less than or equal to a threshold value, the at least one processor 104 may validate the area (A) as an actual area of the flame 302. In one example, if the at least one processor 104 evaluates the difference between the first distance (d1= 100 m) and second distance (d2 = 150 m) as 50 m which is greater than the threshold value, then the at least one processor 104 may evaluate the first area (A = 0.25 meter square) as the actual area of the flame 302. In another example, if the at least one processor 104 evaluates the difference between the first distance (d1= 199.9 m) and the second distance (d2 = 199.9 m) as 0 m which is equal to the threshold value, then the at least one processor 104 may evaluate the first area (A = 0.995 meter square) as the actual area of the flame 302. The actual area (A) and the actual distance (d2) of the flame 302 may be transmitted towards a user to adopt measures for fire control.

At operation 622, when the areas and distance not converge (i.e., if the difference between first distance (d1) and second distance (d2) exceeds the threshold value), then the at least one processor 104, may be configured to derive a subsequent area (Ax) or herein, a second area (A2) using the second distance (d2). Further, the at least one processor 104 further determines a third distance (d3) followed by determining difference between the second distance (d2) and the third distance (d3). The at least one processor 104 assesses if the difference between the second distance (d2) and the third distance (d3) is less than or equal to the threshold value. In an instance in which the difference is greater than the threshold value, then the at least one processor 104 may continue to reiterate the calculation to determine the actual distance of the flame 302. In an instance in which the difference is less than or equal to the threshold value, the at least one processor 104 may stop reiterating the calculation. In an example, if the difference between the first distance (suppose d1= 100 m) and second distance (suppose d2 = 150) i.e. 50 m suggest that the first distance (d1) is not equal to the second distance (d2) or the difference i.e. 50 m may be more than the threshold value, then the at least one processor 104 may evaluate the first area (A = 0.25 meter square) as not the actual area of the flame 302.

At operation 624, the at least one processor 104 may be configured to transmit a data to an admin. Further, the data may comprise location, area distance of the flame 302. At operation 626, the at least one processor 104 may be configured to direct the image capturing device 110 to reiterate and capture fresh frames and reiterate the operations 606, 608 and 620.

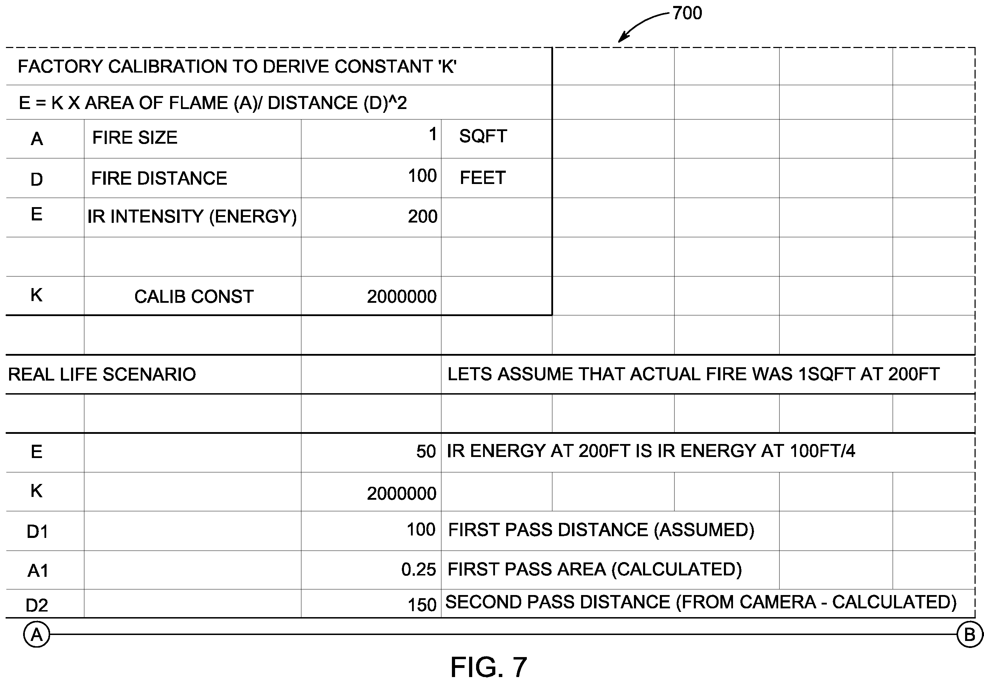

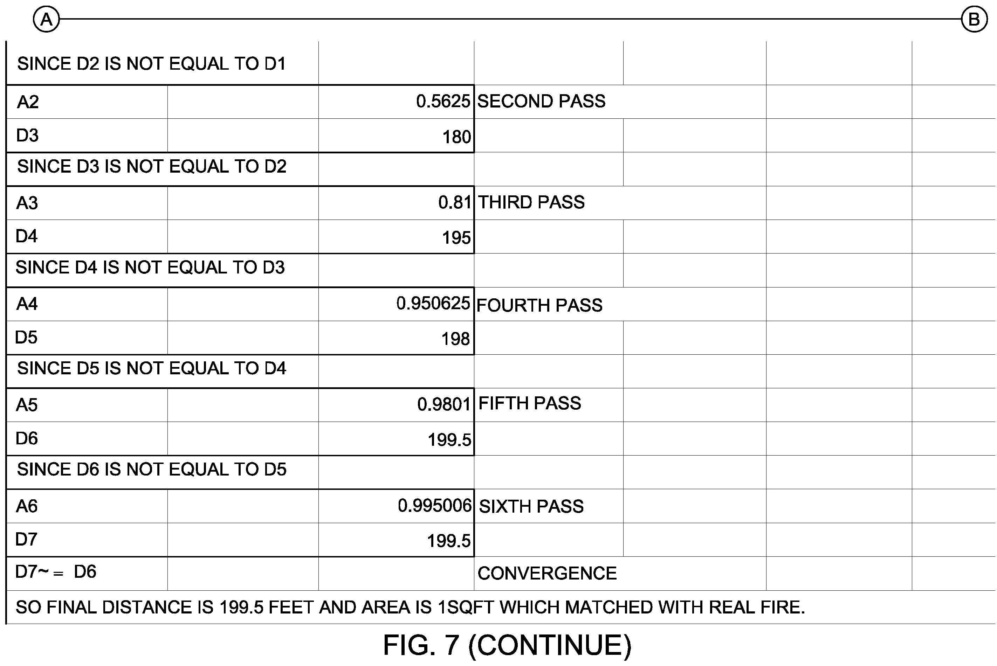

FIG. 7 illustrates a table 700 having a dataset associated with the flame monitoring system 100, in accordance with an example embodiment of the present disclosure.

In an example embodiment, a real life scenario may be considered wherein the flame 302 of area 1 sq. ft. may be present at 200 ft distance from the flame detector 108. In this scenario, in an example the at least one processor 104 may be calibrated by the set of calibration constant inputs 206 including but not limited to flame size (A), flame distance (d), infrared energy (E) or calibration constant (k). In an exemplary embodiment, as per factory calibration, the values may be preset as A = 1sq.feet, d = 100 feet, E = 200 Watts-second/Hz, and k is a constant i.e., 2000000.

As per the calibration constant inputs 206, the at least one processor 104 may evaluate infrared energy (E) = 50, as per inverse correlation between the IR energy and square of distance (inverse square law), E = 50. The at least one processor 104 in synchronization with the flame detector 108 and the image capturing device 110 may assume a first distance (d1) as 100 feet, also referred as first pass distance (assumed) or first distance approximation. Depending on the first distance (d1), the at least one processor 104 may calculate the first area (A1) as 0.25 sq. feet, also referred as first pass area (calculated). Accordingly using the principles of triangulation (as shown in FIG 2B), the second distance (d2) may be calculated via the at least one processor 104, d2 = 150 feet, also referred as second pass distance (calculated from the image capturing device 110). Further, the at least one processor 104 may compare the first distance (d1) and the second distance (d2), wherein in an instance, the first distance (d1) 100 feet is not nearly equivalent to the second distance (d2) 150 feet i.e., difference between the first distance (d1) and the second distance (d2) is more than the threshold value. Since, the first distance (d1) and the second distance (d2) are not nearly equivalent and difference between the first distance (d1) and the second distance (d2) is more than the threshold value, the at least one processor 104 may proceed to reiterate.

In the next iteration, the second distance (d2) may be considered as approximate distance here, and the operation 602 may be repeated to reiterate the second area (A2) using the inverse square law of infrared energy. Using the second area (A2), the third distance (d3), via the at least one processor 104 using the principles of triangulation, may be calculated as the third distance (d3) = 180 feet. In an instance, the at least one processor 104 may deduce difference between the third distance (d3) = 180 feet and the second distance (d2) = 150 feet i.e., more than the threshold value or (d2) and (d3) are not nearly equivalent, again. The at least one processor 104 may reiterate taking the approximate distance from the calculated third distance (d3) in order to determine the third area (A3) and the fourth distance (d4). In another instance, the at least one processor 104 may deduce difference between the fourth distance (d4) = 195 feet and the third distance (d3) = 180 feet i.e., more than the threshold value or (d3) and (d4) are not nearly equivalent, again. The at least one processor 104 may reiterate taking the approximate distance from the calculated fourth distance (d4) in order to determine the fourth area (A4) and the fifth distance (d5). In another instance, the at least one processor 104 may deduce difference between the fifth distance (d5) = 198 feet and the fourth distance (d4) = 195 feet i.e., more than the threshold value or (d4) and (d5) are not nearly equivalent, again. The at least one processor 104 may reiterate taking the approximate distance from the calculated fifth distance (d5) in order to determine the fifth area (A5) and the sixth distance (d6). In another instance, the at least one processor 104 may deduce difference between the sixth distance (d6) = 199.5 feet and the fifth distance (d5) = 198 feet i.e., more than the threshold value or (d5) and (d6) are not nearly equivalent, again. The at least one processor 104 may reiterate taking the approximate distance from the calculated fifth distance (d5) in order to determine the fifth area (A5) and the sixth distance (d6). Similarly, the iterations may be repeated until convergence is achieved. In an instance, at the final iteration as shown in FIG. 6, the sixth distance (d6) = 199.5 feet and the determined seventh distance (d7) = 199.5 feet may be nearly equal to the threshold value 200 feet. Hence, the calculate sixth area (A6) = 0.995 sq. feet may be the actual area of the flame 302 and the seventh distance (d7) = 199.5 feet may be taken as final distance of the flame 302.

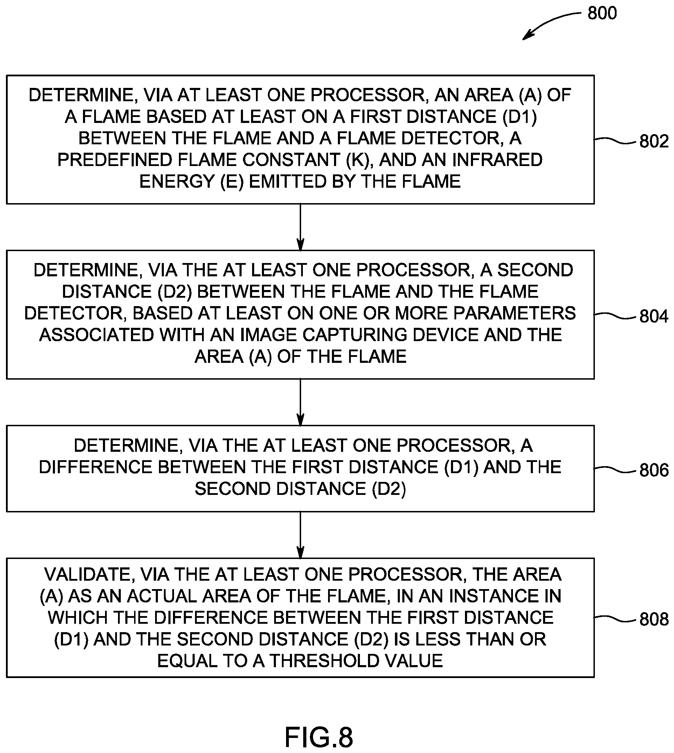

FIG. 8 illustrates a flowchart showing a method 800 of the flame monitoring system 100, in accordance with an example embodiment of the present disclosure. FIG. 8 is described in conjunction with FIGS. 1-7.

At operation 802, the at least one processor 104 interlinked with the flame detector 108 and the image capturing device 110 may calculate the area (A) of the flame 302 by assuming a first distance (d1) between the flame 302 and the flame detector 108, a predefined flame constant (k) and infrared energy (E) emitted by the flame 302. In some embodiments, the area (A) may be determine via the at least one processor 104, by employing the inverse square rule (as explained in operation 204 of FIG.2).

At operation 804, the at least one processor 104 may further be configured to determine a second distance (d2) between the flame 302 and the flame detector 108 based at least on the area (A) and one or more parameters associated with the image capturing device 110. The one or more parameters comprises at least one of a focal length of the image capturing device 110, and a size of the flame 302 (referred herein as size of object, known via the image capturing device 110). The focal length of the image capturing device 110 is pre-calibrated within the at least one processor 104.

At operation 806, the at least one processor 104 may further be configured to determine a difference between the first distance (d1) and second distance (d2). The at least one processor 104 may be configured to determine the second distance (d2) by using a principles of triangulation. As per principles of the triangulation,

*Distance = (size of object x focal length) / size of object via the image capturing device*

In one example, the second distance (d2) may be calculated by the at least one processor 104 as, (d2) = (A1 x focal length) / size of object via the image capturing device 110, wherein the second distance (d2) corresponds to distance between the image capturing device 110 and the object 500. The at least one processor104 may be configured to determine the difference to assess if the difference between the first distance (d1) and second distance (d2) is less than or equal to a threshold value.

At operation 808, the at least one processor 104 may be configured to validate the area (A) as an actual area of the flame 302, in an instance in which the difference between the first distance (d1) and the second distance is less than or equal to a threshold value. In some embodiments, the threshold value may correspond to a baseline value depicting differential convergence of the first distance (d1) and the second distance (d2). In an instance in which the difference between the first distance (d1) and the second distance (d2) is less than or equal to a threshold value, the at least one processor 104 may validate the area (A) as an actual area of the flame 302. In another instance, in which the difference between the first distance (d1) and the second distance (d2) exceeds a threshold value, the at least one processor 104 determines a subsequent area (Ax) of the flame 302 based at least on the second distance (d2), the predefined flame constant (k), and the infrared energy (E) emitted by the flame 302 to determine a subsequent distance (dx). Iteratively, the operations 802 to 808 may be repeated via the at least one processor 104, until differential convergence is achieved. The differential convergence may correspond to difference between the distance (d2) and the subsequent distance (dx) less than or equal to the threshold value.

Embodiments may be configured to determine size and status of a flame 302 within the FOV. Embodiments may be configured to detect IR energy emitted from the flame 302 through the at least one flame detector 108. Embodiments may be configured to correlate the IR energy and one or more images of the FOV captured by the image capturing device 110. Embodiments may be configured to re-iteratively determine accurate distance and accurate area of the flame 302 based on inverse square law and principles of triangulation.

In some embodiments, the flame monitoring system 100 is configured to accurately determine size of the flame 302 and at the same time also configured to determine distance of the flame 302 from the monitoring device 102. In some embodiments, the flame monitoring system 100 based on the determined size of the flame 302 and the distance of the flame 302 from the monitoring device 102, is configured to allow the user to understand about an intensity of the flame 302 even from a remote location. In some embodiments, the flame monitoring system 100 is further configured to provide detailed information about the determined size of the flame 302 and the distance of the flame 302 to the user, that may be used for submitting as an evidence to an insurance agency, in case of an accident. In some embodiments, the detailed information may also be tracked by the user in order to mitigate possible accidents that may occur due to the flame 302 within the facility 300.

Many modifications and other embodiments of the disclosure set forth herein will come to mind to one skilled in the art to which the present disclosure pertains having the benefit of the teachings presented in the foregoing descriptions and the associated drawings. Therefore, it is to be understood that the present disclosure is not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

**Claims**

1. A flame monitoring system comprising:

   a flame detector configured to sense an infrared energy (E) emitted by a flame within a field of view (FOV) of the flame detector;
   an image capturing device configured to capture one or more images of the flame within the FOV of the flame detector; and
   at least one processor communicatively coupled to the flame detector and the image capturing device, wherein the at least one processor is configured to:

      determine an area (A) of the flame based at least on a first distance (d1) between the flame and the flame detector, a predefined flame constant (k), and the infrared energy (E) emitted by the flame;
determine a second distance (d2) between the flame and the flame detector based at least on one or more parameters associated with the image capturing device and the area (A) of the flame;
determine a difference between the first distance (d1) and the second distance (d2); and
in an instance in which the difference between the first distance (d1) and the second distance (d2) is less than or equal to a threshold value, validate the area (A) as an actual area of the flame.

2. The flame monitoring system of claim 1, wherein the flame detector corresponds to an infrared (IR) sensor and the image capturing device corresponds to a camera sensor.

3. The flame monitoring system of claim 1, wherein the one or more parameters comprise at least one of a focal length of the image capturing device and a size of the flame on the image capturing device.

4. The flame monitoring system of claim 3, wherein the at least one processor, via using the image capturing device, is configured to determine the size of the flame on the image capturing device, based at least on one or more pixels of the one or more images of the flame captured by the image capturing device.

5. The flame monitoring system of claim 1, wherein the at least one processor is further configured to provide the area (A) validated as the actual area of the flame along with a location of the flame and the first distance (d1) between the flame and the flame detector, to a user over a display unit.

6. The flame monitoring system of claim 1, wherein the at least one processor is further configured to, in an instance in which the difference between the first distance (d1) and the second distance (d2) exceeds the threshold value:

determine a subsequent area (Ax) of the flame based at least on the second distance (d2), the predefined flame constant (k), and the infrared energy (E) emitted by the flame; and
determine a subsequent distance (dx).

7. The flame monitoring system of claim 6, wherein the at least one processor is configured to reiterate the FOV of the flame detector in an instance in which the difference between the first distance (d1) and the second distance (d2) exceeds the threshold value, to detect the flame within another FOV.

8. The flame monitoring system of claim 1, wherein the image capturing device is positioned in proximity to the flame detector or integrated within the flame detector.

9. The flame monitoring system of claim 1, wherein the at least one processor is configured to calibrate the predefined flame constant (k) using data.

10. The flame monitoring system of claim 9, wherein the data corresponds to a size of one or more flames and a distance of each of the one or more flames from the flame detector.

11. A method comprising:

determining, via at least one processor, an area (A) of a flame based at least on a first distance (d1) between the flame and a flame detector, a predefined flame constant (k), and an infrared energy (E) emitted by the flame, wherein the flame detector is configured to sense the infrared energy (E) emitted by the flame within a field of view (FOV) of the flame detector,
and wherein an image capturing device configured to capture one or more images of the flame within the FOV of the flame detector;
determining, via the at least one processor, a second distance (d2) between the flame and the flame detector, based at least on one or more parameters associated with the image capturing device and the area (A) of the flame;
determining, via the at least one processor, a difference between the first distance (d1) and the second distance (d2); and
validating, via the at least one processor, the area (A) as an actual area of the flame, in an instance in which the difference between the first distance (d1) and the second distance (d2) is less than or equal to a threshold value.

12. The method of claim 11, wherein the flame detector corresponds to an infrared (IR) sensor and at least one image capturing device corresponds to a camera sensor.

13. The method of claim 11, wherein the one or more parameters comprise at least one of a focal length of the image capturing device and a size of the flame on the image capturing device.

14. The method of claim 13 further comprising determining, via the at least one processor, the size of the flame on the image capturing device, based at least on one or more pixels of the one or more images of the flame captured by the image capturing device.

15. The method of claim 11 further comprising providing, via the at least one processor, the area (A) validated as the actual area of the flame along with a location of the flame, and the first distance (D1) between the flame and the flame detector, to a user over a display unit.

100

FLAME MONITORING SYSTEM

MONITORING DEVICE — 102

FLAME DETECTOR — 108

IMAGE CAPTURING
DEVICE — 110

AT LEAST ONE PROCESSOR — 104

MEMORY — 106

FIG. 1

FIG. 2

EP 4 682 851 A1

FIG. 3

400

```
┌─────────────────────────────────────────┐
│  IMAGE CAPTURING DEVICE GETS EVENT       │
│  FROM FLAME DETECTOR WITH FLAME SIZE     │──── 402
└─────────────────────────────────────────┘
                    │
                    ▼
┌─────────────────────────────────────────┐
│  IMAGE CAPTURING DEVICE IDENTIFIES FLAMES│
│  IN A FIELD OF VIEW                      │──── 404
└─────────────────────────────────────────┘
                    │
                    ▼
┌─────────────────────────────────────────┐
│  GET THE FLAME ROI, FOCAL LENGTH, FLAME  │
│  SIZE, SIZE OF OBJ IN SENSOR BASED ON ROI│──── 406
└─────────────────────────────────────────┘
                    │
                    ▼
┌─────────────────────────────────────────┐
│  DETERMINE THE DISTANCE USING PRINCIPLES │
│  OF TRIANGULATION                        │
│  (DISTANCE = (SIZE OBJ × FOCAL LENGTH) / SIZE │──── 408
│  OBJ ON SENSOR)                          │
└─────────────────────────────────────────┘
```

FIG. 4

110

REQUIRED DISTANCE

3.33m

KNOWN
PARAMETER
SIZE OBJ

500

FIG. 5

FIG. 6

| FACTORY CALIBRATION TO DERIVE CONSTANT 'K' | | | | |
|---|---|---|---|---|
| E = K X AREA OF FLAME (A)/ DISTANCE (D)^2 | | | | |
| A | FIRE SIZE | 1 | SQFT | |
| D | FIRE DISTANCE | 100 | FEET | |
| E | IR INTENSITY (ENERGY) | 200 | | |
| | | | | |
| K | CALIB CONST | 2000000 | | |
| | | | | |
| REAL LIFE SCENARIO | | | LETS ASSUME THAT ACTUAL FIRE WAS 1SQFT AT 200FT | |
| | | | | |
| E | | 50 | IR ENERGY AT 200FT IS IR ENERGY AT 100FT/4 | |
| K | | 2000000 | | |
| D1 | | 100 | FIRST PASS DISTANCE (ASSUMED) | |
| A1 | | 0.25 | FIRST PASS AREA (CALCULATED) | |
| D2 | | 150 | SECOND PASS DISTANCE (FROM CAMERA - CALCULATED) | |

Ⓐ ————————————————————————————————————— Ⓑ

FIG. 7

| | | | | | |
|---|---|---|---|---|---|
| SINCE D2 IS NOT EQUAL TO D1 | | | | | |
| A2 | | 0.5625 | SECOND PASS | | |
| D3 | | 180 | | | |
| SINCE D3 IS NOT EQUAL TO D2 | | | | | |
| A3 | | 0.81 | THIRD PASS | | |
| D4 | | 195 | | | |
| SINCE D4 IS NOT EQUAL TO D3 | | | | | |
| A4 | | 0.950625 | FOURTH PASS | | |
| D5 | | 198 | | | |
| SINCE D5 IS NOT EQUAL TO D4 | | | | | |
| A5 | | 0.9801 | FIFTH PASS | | |
| D6 | | 199.5 | | | |
| SINCE D6 IS NOT EQUAL TO D5 | | | | | |
| A6 | | 0.995006 | SIXTH PASS | | |
| D7 | | 199.5 | | | |
| D7~ = D6 | | | CONVERGENCE | | |
| SO FINAL DISTANCE IS 199.5 FEET AND AREA IS 1SQFT WHICH MATCHED WITH REAL FIRE. | | | | | |

## FIG. 7 (CONTINUE)

EP 4 682 851 A1

800

DETERMINE, VIA AT LEAST ONE PROCESSOR, AN AREA (A) OF A FLAME BASED AT LEAST ON A FIRST DISTANCE (D1) BETWEEN THE FLAME AND A FLAME DETECTOR, A PREDEFINED FLAME CONSTANT (K), AND AN INFRARED ENERGY (E) EMITTED BY THE FLAME

802

DETERMINE, VIA THE AT LEAST ONE PROCESSOR, A SECOND DISTANCE (D2) BETWEEN THE FLAME AND THE FLAME DETECTOR, BASED AT LEAST ON ONE OR MORE PARAMETERS ASSOCIATED WITH AN IMAGE CAPTURING DEVICE AND THE AREA (A) OF THE FLAME

804

DETERMINE, VIA THE AT LEAST ONE PROCESSOR, A DIFFERENCE BETWEEN THE FIRST DISTANCE (D1) AND THE SECOND DISTANCE (D2)

806

VALIDATE, VIA THE AT LEAST ONE PROCESSOR, THE AREA (A) AS AN ACTUAL AREA OF THE FLAME, IN AN INSTANCE IN WHICH THE DIFFERENCE BETWEEN THE FIRST DISTANCE (D1) AND THE SECOND DISTANCE (D2) IS LESS THAN OR EQUAL TO A THRESHOLD VALUE

808

FIG.8

**EP 4 682 851 A1**

Europäisches
Patentamt
European
Patent Office
Office européen
des brevets

# EUROPEAN SEARCH REPORT

**Application Number**

EP 25 18 2921

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 3 363 003 B1 (HONEYWELL INT INC [US]) 1 December 2021 (2021-12-01) * 16-33,38-59; Figs. 1,2 * | 1-15 | INV. G08B17/12 G08B29/18 |
| A | US 5 289 275 A (ISHII HIROMITSU [JP] ET AL) 22 February 1994 (1994-02-22) * column 1, line 6 - line 17 * * column 2, line 41 - column 7, line 2 * * column 8, line 12 - line 24 * * figures 1,2,4,5 * | 1-15 | ADD. G01J5/00 G08B29/20 |
| A | CN 108 761 436 B (SHANGHAI GANGXIAO NETWORK TECH CO LTD) 25 July 2023 (2023-07-25) * the whole document * | 1-15 | |
| A | US 2015/009335 A1 (STRANDEMAR KATRIN [SE]) 8 January 2015 (2015-01-08) * 41-55,81,120-149,167; Fig. 1 * | 1-15 | |
| A | CN 117 258 190 A (ZHANKUO ELECTRONIC TECH SUZHOU CO LTD) 22 December 2023 (2023-12-22) * the whole document * | 1-15 | TECHNICAL FIELDS SEARCHED (IPC) G08B G01J H04N |
| A | US 2015/304636 A1 (RHEAD JAMIE [US] ET AL) 22 October 2015 (2015-10-22) * 26,29-31,46-52,62-68,74; Figs. 3,4 * | 1-15 | |

The present search report has been drawn up for all claims

| Place of search | Date of completion of the search | Examiner |
|---|---|---|
| Munich | 1 December 2025 | Hausinger, Johannes |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 2921

This annex lists the patent family members relating to the patent documents cited in the above-mentioned European search report.
The members are as contained in the European Patent Office EDP file on
The European Patent Office is in no way liable for these particulars which are merely given for the purpose of information.

01-12-2025

| Patent document cited in search report | | Publication date | Patent family member(s) | | Publication date |
|---|---|---|---|---|---|
| EP 3363003 | B1 | 01-12-2021 | CN | 108369764 A | 03-08-2018 |
| | | | EP | 3363003 A1 | 22-08-2018 |
| | | | US | 2018316867 A1 | 01-11-2018 |
| | | | WO | 2017065808 A1 | 20-04-2017 |
| US 5289275 | A | 22-02-1994 | DE | 4222920 A1 | 14-01-1993 |
| | | | GB | 2257598 A | 13-01-1993 |
| | | | US | 5289275 A | 22-02-1994 |
| CN 108761436 | B | 25-07-2023 | NONE | | |
| US 2015009335 | A1 | 08-01-2015 | NONE | | |
| CN 117258190 | A | 22-12-2023 | NONE | | |
| US 2015304636 | A1 | 22-10-2015 | CN | 105007407 A | 28-10-2015 |
| | | | EP | 2938061 A1 | 28-10-2015 |
| | | | US | 2015304636 A1 | 22-10-2015 |

EPO FORM P0459

For more details about this annex : see Official Journal of the European Patent Office, No. 12/82